# DEMANDE DE BREVET EUROPEEN

(11) **EP 0 571 682 A1**
(43) Date de publication de la demande: **01.12.1993**
(21) Numéro de dépôt: 92440062.5
(22) Date de dépôt: 27.05.1992
(51) Int. Cl.: B32B 27/08, B32B 7/02, B65D 65/40

(54) **Feuille laminée thermoscellable**

(71) Demandeur: COFRADEC S.A., F-59530 Le Quesnoy (FR)
(72) Inventeur: Dupont Guy, B-7050 Jurbise (BE)
(74) Mandataire: AMMANN INGENIEURS-CONSEILS EN PROPRIETE INTELLECTUELLE SA BERNE

(57) **Abrégé**

On décrit une feuille laminée thermoscellable (20) comprenant au moins trois couches (22, 24, 28). Le film thermoscellable dirigé vers l'intérieur d'un emballage est un film composite (28) à scellage dégressif vers l'intérieur. La feuille thermoscellable est exempte de toute matière pouvant influer négativement sur un recyclage complet, entier et homogène de l'ensemble de la feuille laminée thermoscellable.

## Description

La présente invention appartient à la technique des feuilles ou films minces, de préférence utilisables dans le domaine de l'emballage et de l'impression, et elle concerne plus spécifiquement une feuille laminée thermoscellable en matière polymère, et un procédé de sa fabrication.

Les feuilles laminées thermoscellables, parfois appelées "thermocollables", sont déjà connues. Elles sont largement utilisées dans le domaine de l'emballage, en particulier, mais non exclusivement, à l'emballage thermoscellable de produits alimentaires, et ont pour but de protéger les produits emballés de la poussière, de la lumière, de l'oxygène de l'air et de toute autre influence nuisible. En plus, elles servent à rendre la marchandise emballée plus attrayante, spécialement si les feuilles ou films sont imprimés, dont aussi à la publicité.

Ces feuilles sont produites en bandes, et les procédés de leur fabrication sont bien connus. En bref, il s'agit à combiner par lamination différents films dont chacun a sa propre but et utilité. Un exemple de film laminée thermoscellable sera décrit plus bas. Les films sont en général transparents sauf aux endroits opaques voulus, endroits qui sont normalement rendus opaques par une impression appropriée.

Dans ce qui suit, le terme "film" sera utilisé pour désigner une composante bidimensionnelle et généralement très mince, de l'ensemble des films qui sera appelé "feuille laminée" ou brièvement "feuille".

Pour l'utilisation des feuilles laminées thermoscellables, on déroule une bande d'une feuille à partir de rouleaux comportant cette bande; la largeur des rouleaux est adaptée aux machines de production et est choisie en fonction du produit à emballer. L'emballage proprement dit sera obtenu dans des machines à emballer bien connues. Dans ces machines, la bande de la feuille est enroulée autour du produit, thermocollée sur elle-même, éventuellement mise en forme et coupée de façon désirée. Toutes ces opérations sont bien connues de l'homme du métier.

De nos jours, le recyclage des matières utilisées est devenu une nécessité absolue. Comme il est connu depuis longtemps dans l'industrie, les déchets de fabrication sont recupérés et recyclés, souvent dans l'usine de production elle-même. Mais à présent, ces recyclages ne suffisent plus vu que les matières premières deviennent de plus en plus rares et donc plus chères, et il est devenu pratique courante de faire collecter les emballages utilisées de toute sorte, métal, verre, papier, matière plastique, etc., chez le distributeur et aussi par l'utilisateur final.

Or, on a dû constater que les feuilles laminées thermoscellables utilisées jusqu'à présent ne sont pas recyclables par les techniques simples développées ad hoc. En particulier, il a été trouvé que de telles feuilles laminées thermoscellés, une foi recupérées et refondues, ont perdu leur aptitude de former un film homogène et cohérent. On a trouvé que la cause en est le fait que les résines liantes des encres d'impression utilisées pour imprimer le film intérieur de la feuille laminée, rendent le film graineux et cassant après le recyclage. Une couche de colle, autre composante des feuilles laminées thermoscellables connues, est généralement à base de polyurethanes ou de néoprène pour éviter un cisaillement des films qui constituent la bande laminée au cours de l'étape de laminage. En plus, cette colle doit être appliquée en solution et contient des solvants; la couche de colle appliquée doit donc soumise à un séchage poussé pour évaporer tous les solvants.

Il est donc un but principal de la présente invention de proposer la solution du problème discuté ci-dessus, a savoir de mettre à disposition une feuille laminée thermoscellable qui est entièrement recyclable en fournissant, lors du recyclage, des matières utilisables sans difficulté pour la fabrication d'une nouvelle feuille laminée et de obvier aux désavantages des feuilles laminées thermoscellables existantes.

Les buts de l'invention sont atteints par la feuille laminée thermoscellable qui est définie dans la première revendication, et les réalisations spéciales font l'objet des revendications dépendantes.

L'invention vise en plus un nouveau procédé de préparation de la feuille laminée thermoscellable selon le premier aspect de l'invention, et ce procédé fait l'objet de la seconde revendication indépendante. On a trouvé, de manière surprenant, que la feuille laminée thermoscellable selon l'invention peut être fabriquée de manière plus simple donc plus économique et en évitant le cisaillement des films lors de l'étape de laminage.

Dans ce qui suit, on décrira à titre d'exemple des réalisations particulières de la feuille laminée thermoscellable selon l'invention et du procédé pour sa fabrication; cette description ne limitera pas l'invention aux réalisations à décrire.

On se référera au dessin dans lequel:
- la fig 1 représente une coupe verticale d'une feuille laminée thermoscellable selon l'état de la technique, à une échelle bien agrandie;
- la fig 2 représente la même coupe mais d'une feuille laminée thermoscellable selon l'invention;
- la fig. 3 est une vue toute schématique d'une installation pour mettre en oeuvre le procédé de l'invention, et
- la fig.4 est une vue schematique d'un emballage produite en utilisant la feuille selon l'invention.

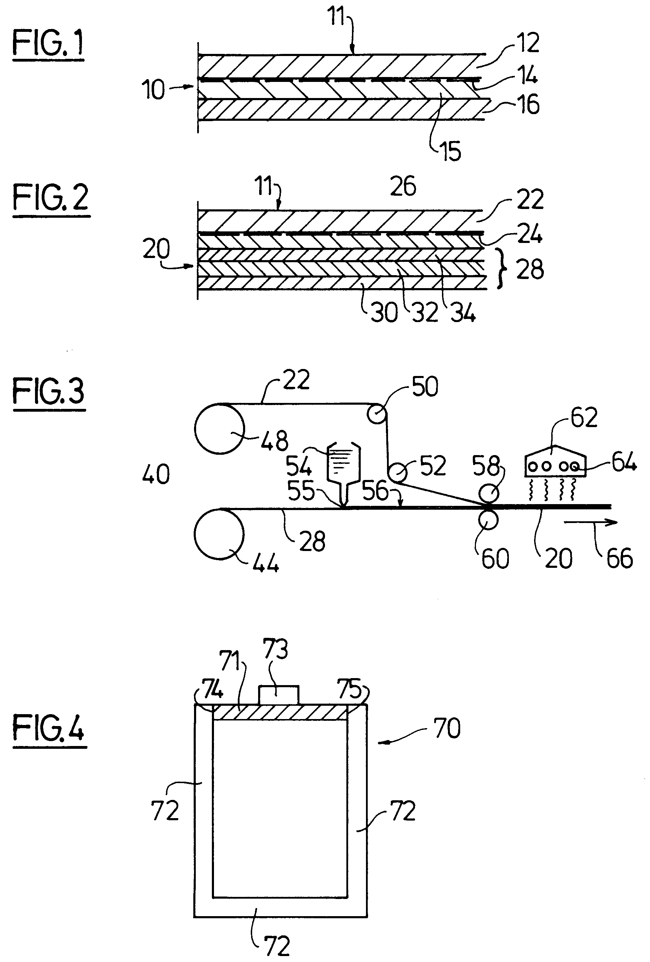

Dans la fig. 1, on voit une coupe d'une feuille laminée thermoscellable 10 comme elle est couramment utilisée. La surface supérieure 11 est la face extérieure donc celle qui ne présente pas de colle. Le film 12 est en matière plastique normalement transparente ou translucide, par exemple en polyester (comme le PETP), polypropylène (PP), polyéthylène (PE), alcool polyvinylique (PVA), polyamide (PA) comme nylon, cellophane, etc. Ce film 12 est imprimée sur sa face inférieur par des dessins ou caractères 14. Le film 12 est collé au film thermoscellable 16 en ployéthylène ou polypropylène par une couche de colle 15 à base de polyuréthane (PU); il a déjà été mentionné ci-dessus que la couche de colle 15 qui sert a réunir les couches ou films 12 et 16 est nécessaire pour éviter un cisaillement des deux dernières couches lors de l'utilisation de la feuille laminée thermoscellable. En général, les encres qui servent à imprimer le film 12 (marques 14) contiennent comme liant des résines qui ne sont pas recyclables avec les autres matières de la feuille feuille laminée thermoscellable 10 et ne peuvent pas être séparées du reste de la feuille.

La feuille laminée thermoscellable 20 selon l'invention (fig. 2) est complètement et intégralement recyclable et présente en plus des propriétés améliorées de résistances thermiques et mécaniques; elle possède un "hot tack" plus important et peut être scellée à des températures plus basses. En général, la feuille laminée thermoscellable 20 est constituée d'un film extérieur 22 qui sert de support mécanique à l'ensemble de la feuille et consiste en matière transparente ou translucide. Ce film 22 est imprime sur sa face inférieure par un dessin 24 (qui comprend aussi les caractères alphanumériques). De préférence, l'encre d'imprimérie utilisée est exempte de matières liantes qui ne sont pas compatibles, en ce qui concerne l'aptitude de recyclage, avec les autres constituants de la feuille 20. De tels liants sont par exemple les résines, PVB, polyamide ou acryliques, réticulables ou non. Vers l'intérieur de la feuille 20, il y a une couche de colle 26 dont la nature sera décrite plus bas. Finalement, la partie intérieure de la feuille, à savoir dirigée vers le produit à enballer, est constituée d'un film composite 28 qui sera décrit plus bas également.
1.a) Dans une première réalisation de la feuille 20, le film 22 est en PP biorienté. La couche de colle 26 est constituée par une colle thermodurcissable, par exemple durcissable par rayonnement ultraviolet (UV), généralement à base de résines acryliques. Le film composite 28 selon l'invention est un film à scellage dégressif et comprenant généralement trois couches 30, 32 et 34. La couche intérieure 34 est en PP homopolymère, la couche médiane 32 est une couche en copolymère statistique de PP, et la couche extérieure 30 est un terpolymère de propylène.
1.b) Dans une variante de la réalisation 1.a) décrite ci-dessus, le film 22 est en PP biorienté. La couche de colle 26 est constituée par une colle thermodurcissable, par exemple durcissable par rayonnement ultraviolet (UV), généralement à base de résines acryliques. Le film composite 28 selon l'invention est un film à scellage dégressif et comprenant généralement trois couches 30, 32 et 34. La couche intérieure 34 est en PP homopolymère, la couche médiane 32 est composée de deux matériaux; l'un du centre du centre est de l'EVOH et l'autre en couche mince de chaque côté de l'EVOH est un adhésif de coextrusion, et la couche extérieure 30 est en un terpolymère de propylène. Cette varainte apporte une barrière supplémentaire aux gaz en conservant la recyclabilité.
2.a) Dans une seconde réalisation de la feuille 20, l'ensemble des films et couches est principalement en PE. Le film supérieur extérieur 22 est en PE biorienté de haute densité. La colle 26 est une colle à base de polyéther compatible avec le PE. Le film composite 28 comprend une couche intérieure 34 en PE de moyenne à haute densité linéaire, une couche médiane 32 en PE de basse à moyenne densité linéaire, et une couche extérieure 30 en PE de très basse densité linéaire.
2.b) Dans une variante du point 2.a) ci-dessus de la feuille 20, l'ensemble des films et couches est principalement en PE. Le film supérieur extérieur 22 est en PE biorienté de haute densité. La colle 26 est une colle à base de polyéther compatible avec le PE. Le film composite 28 comprend une couche intérieure 34 en PE de basse à moyenne densité linéaire, une couche médiane 32 composée de deux matériaux; l'un du centre est de l'EVOH et l'autre en couche mince de chaque côté de l'EVOH est un adhésif de coextrusion. La couche extérieure 30 est en un PE de très basse densité linéaire.

La barrière contre l'oxygène est donc constituée par une couche en alcool de poly(éthylvinyle) (EVOH) intercalée entre les couches 30 et 32, la couche 34 étant supprimée. Cette barrière n'est pas représentée à la fig. 2 car elle prend la place de la couche 32; la suite des couches, de haut en bas à la fig. 2, est donc la suivante: - couche 34 en PE linéaire de moyenne à basse densité - couche 32 en EVOH, et - couche 30 en PE linéaire de très basse densité.
3.) On a mentionné comme matières du film composite 28 des polymères PE et PP. Il peut également être fabriqué à partir d'autres matières polymères telles que les polyester, etc.
4.) Toutes les réalisations ci-dessus peuvent être améliorées au point de vue de la barrière aux gaz et aux arômes en intercollant sur la feuille 22 munie de son impression 24, une couche de laque à base de PVA. La colle 26 sera alors déposée sur le PVA selon le procédé décrit ci-dessous.

L'épaisseur totale de la feuille laminée thermoscellable selon l'invention peut être choisie dans des limites relativement larges. Cette épaisseur se situera généralement entre 0,04 et 0,2 mm et peut être plus élevée pour des utilisations spéciales. Le film composite 28 mesure par exemple de 20 à 100 µm, le film supérieur 22 de 12 à 20 µm, la couche d'impression autour de 2 µm environ, et la couche de colle autour de 5 µm en épaisseur. L'invention n'est pas limitée à ces mesures données à titre d'exemple uniquement, ni aux réalisations concrètes décrites ci-dessus.

Dans la description des réalisations préférées de la feuille laminée thermoscellable selon l'invention, on a mentionné trois couches principales du film composite laminée. Or, l'invention n'est pas limitée à ce nombre de trois couches, et, si nécessaire ou désiré, plusieurs couches peuvent être prévues, par exemple quatre, cinq, six, etc.

Les feuilles laminées thermoscellables de l'état de la technique comprennent, comme on l'a déjà décrit ci-dessus, une colle principalement en PU. Selon l'invention, on utilise une colle (couche 26) en matière thermodurcissable ou compatible. On a trouvé que cette couche de colle peut être appliquée sur le verso du film 22, déjà imprimé, par une technique simple et sans utilisation de solvants. La colle classique à base de PU ou d'autres matières collantes, comme le néoprène, doit être appliquée sous forme de solution ou dispersion des matières collantes dans un solvant organique qui doit être évaporé après l'étape de revêtement. Or, selon l'invention, on utilise une colle thermodurcissable ou compatible exempte de solvant, de préférence une colle acrylique ou polyéther qui polymérise sous l'influence des rayons UV ou simplement à la chaleur; pour chaque mode de polymérisation, on ajoute des initiateurs appropriés. Ces colles et le mode de leur utilisation générale sont connues en soi. On préfère également l'utilisation d encres d'imprimerie à base de liant acryliques, polyamides ou PVB pour produire l'impression 24.

On a dit que la couche de colle 26 dans la feuille laminée thermoscellable selon l'invention sera de préférence appliquée par une technique spéciale. Un dispositif de revêtement est très schématiquement représenté à la fig. 3.

On voit un rouleau 48 comportant un enroulement de film 22 (voir fig. 2), déjà imprimé au verso, et un rouleau 44 comprenant un enroulement de film composite 28 (fig. 2). Une composition de colle thermodurcissable est contenue dans le récipient 54 qui comporte une ouverture mince 55, par exemple une filière linéaire horizontale, qui est arrangée à une petite distance au-dessus de la bande de la feuille 28 qui se déplace continuellement en direction de la flèche 66 et dont la surface présentant la couche la moins facilement thermoscellable est celle où la colle est déversée. Des moyens non représentés pour égaliser la couche 56 de colle qui s'est écoulée sur la bande 28, peuvent être prévus. Le film 22 venant du rouleau 48 est dirigé par les rouleaux de renvoi 50 et 52 vers la bande 28 déjà munie de la couche de colle 56, et il avance avec la même vitesse que la bande 28. Les deux bandes ou films 22 et 28 (ce dernier avec sa couche de colle 56) sont réunis entre les rouleaux compresseurs 58 et 60 dont l'action de pression peut être réglée. Par la suite, la bande composite 20 ainsi obtenue sans aucun cisaillement ni séchage de colle est fait avancer au-dessous du dispositif de durcissement 62. Ce dispositif 62 peut être un corps de chauffe qui chauffe tout le film composite 20 ou une série de tubes 64 transversaux qui émettent des rayons infrarouges (IR) ou ultraviolets (UV) selon le désir ou la nécessité technique. Le chauffage par rayons UV est préféré car les initiateurs présents dans la composition de colle thermodurcissable 56 captent sélectivement l'énergie de rayonnement qui cause la polymérisation de la colle sans que la couche thermoscellable de l'ensemble 20 soit chauffée à sa température active.

La feuille laminée thermoscellable ainsi obtenue est utilisable pour l'emballage et le thermoscellage à des températures plus basses que celles nécessaires jusqu'à présent et présente un "hot tack" plus important. La feuille laminée 20 est complètement et entièrement recyclable. Par exemple, on peut fabriquer des sacs a ordures à partir de la feuille récupérée ou même incorporer une partie de cette feuille récupérée dans le film 22 de la feuille laminée thermoscellable selon l'invention. La feuille laminée thermoscellable selon l'invention est également recyclable en combinaison avec le polystyrène vierge ou recyclé.

Une variante pour tous les procédés ci-dessus consiste à rendre pelable une partie du scellage sur l'emballage fini d'un produit emballée au moyen de la feuille thermoscellée de l'invention, à l'emplacement et avec la force de pelabilité desirés alors que le reste du paquet est une scellage inviolable.

Cette variante est schématiquement représentée à la fig 4. On voit un paquet 70 dont les bordures 72 désignent une zone de scellage inviolable. La bordure 71 est la partie pelable. Le paquet ainsi formé s'ouvrira, grâce aux oreilles de préhension 73 ou d'autres moyens de saisie fixés à la bordure 71 du paquet. L'ouverture sera alors limitée de manière précise aux endroits 74 et 75 de chaque côté par le scellage inviolable. La bordure 71 est préparée pour être pelée par application d'une zone correspondante de laque sans solvants et sans irradiation.

De plus, pour préserver l'intégrité du paquet, l'ouverture sera mise en évidence par un blanchissement de la zone de scellage.

L'invention permet d'obtenir des emballages à effet "skin". Il s'agit d'une rétraction de la feuille autour du produit à conditionner. On utilise une feuille laminée thermoscellable comprenant la combinaison d'un matériau biorienté associé à un matériau non orienté ("cast") de mème nature . Lorsque cet arrangement de matières est soumis a une température de conditionnement extérieure voisine de la température de stabilisation de la biorientation, il se produit une rétraction unidirectionnelle proportionnelle à l'apport calorifique. Ce procédé permet aussi un apport de matériaux dans la zone de scellage, renforçant ainsi les valeurs mécaniques des soudures.

## Revendications

1. Feuille laminée thermoscellable en matière polymère, comprenant un film en matière plastique dirigé vers l'extérieur, un film thermoscellable dirigé vers l'intérieur, et une couche de colle intercalée entre les deux films, caractérisée en ce que le film thermoscellable de la feuille laminée est un film composite (28) à scellage dégressif vers l'intérieur, et que la feuille laminée thermoscellable est exempte de toute matière étrangère à un recyclage complet, entier et homogène de l'ensemble de la feuille laminée thermoscellable.

2. Feuille selon la revendication 1, caractérisée en ce que le film composite (28) comprend au moins trois couches superposées (30, 32, 34) dont la température de thermoscellage décroît de l'intérieur (couche 34) vers l'extérieur (couche 30) pour fournir un scellage dégressif.

3. Feuille selon les revendications 1 et 2, caractérisée en ce que les trois couches (30, 32, 34) sont en polypropylène homopolymère (couche 34), en polypropylène copolymère statistique (couche 32), et en polypropylène terpolymère (couche 30).

4. Feuille selon les revendications 1 et 2, caractérisée en ce que les trois couches (30, 32, 34) sont en polyéthylène linéaire de haute a moyenne densité (couche34), en polyéthylène linéaire de moyenne à basse densité (couche32), et en polyéthylène linéaire de très basse densité (couche 30).

5. Feuille selon la revendication 4, caractérisée en ce qu'elle présente une barrière supplémentaire contre la vapeur d'eau, obtenue en supprimant la couche en polyéthylène de haute à moyenne densité (34) et en intercalant une couche en alcool de poly(éthylvinyle) (32) entre les deux couches restantes.

6. Feuille selon la revendication 4, caractérisée en ce qu'elle présente une barrière supplémentaire contre l'oxygène, obtenue en intercalant une couche de laque d'alcool polyninylique au moins entre deux couches (30, 32 ou/et 32, 34) du film composite (28).

7. Feuille selon les revendications 5 et 6 combinées.

8. Feuille selon l'une ou plusieurs des revendications précédentes, caractérisée en ce que le film supérieur (22) dirigé vers l'extérieur de la feuille laminée est en polypropylène ou en polyéthylène de haute densité biorientés.

9. Feuille selon l'une ou plusieurs des revendications précédentes, caractérisée en ce que le film supérieur (22) comporte une impression (24) à sa face inférieure.

10. Feuille selon l'une ou plusieurs des revendications précédentes, caractérisée en ce que la colle (couche 24) est une colle thermodurcissable ou compatible sans solvant.

11. Feuille selon la revendication 9, caractérisée en ce que la colle est à base de résines polyacryliques durcissable aux rayons ultraviolets.

12. Procédé de fabrication de la feuille laminée thermoscellable selon l une quelconque des revendications précédentes, caractérisée en ce que l'on applique une couche de colle (56) sur la surface la moins thermoscellable d'un film composite (28) à scellage dégressif, on amène un film (22) faisant couche supérieure de la feuille laminée thermoscellable à fabriquer, on place ce dernier sur la couche de colle, et on polymérise la colle, toutes ces opérations étant exécutées en continu.

13. Procédé selon la revendication 11, caractérisée en ce que la polymérisation continue de la colle est effectuée par rayonnement à l'ultraviolet.

14. Procédé de fabrication d'un emballage thermoscellé a ouverture facilitée en utilisant une feuille laminée thermoscellable selon l'une ou plusieurs des revendications 1 à 11, caractérise en ce qu'une bordure d'un emballage à être formé est revêtue d'une laque sans solvant et sans irradiation afin de créer une zone pelable pour une ouverture facile de l'emballage.

15. Procédé de fabrication d'un emballage thermoscellé à bordures scellées renforcées et à effet "skin" de retrait unidimensionnel, en utilisant une feuille laminée thermoscellable selon l une ou plusieurs des revendications 1 à 11, caractérisée en ce qu'on utilise une feuille laminée où une couche au moins de la feuille est constituée d'une association d'un matériau polymère biorienté à un matériau polymère non orienté.
